(19) Europäisches Patentamt
European Patent Office
Office européen des brevets

(11) EP 2 449 314 B1

(12) # EUROPÄISCHE PATENTSCHRIFT

(45) Veröffentlichungstag und Bekanntmachung des Hinweises auf die Patenterteilung:
**13.04.2016 Patentblatt 2016/15**

(21) Anmeldenummer: **10730093.1**

(22) Anmeldetag: **01.07.2010**

(51) Int Cl.:
***G05D 23/19*** (2006.01) ***F24F 11/00*** (2006.01)
***F24F 5/00*** (2006.01) ***F24D 3/14*** (2006.01)
***F24D 19/10*** (2006.01)

(86) Internationale Anmeldenummer:
**PCT/EP2010/003940**

(87) Internationale Veröffentlichungsnummer:
**WO 2011/000547 (06.01.2011 Gazette 2011/01)**

(54) **VERFAHREN UND VORRICHTUNG ZUR GEBÄUDE-TEMPERIERUNG**

METHOD AND DEVICE FOR CONTROLLING THE TEMPERATURE OF A BUILDING

DISPOSITIF ET PROCÉDÉ DE THERMORÉGULATION D'UN BÂTIMENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009032208**

(43) Veröffentlichungstag der Anmeldung:
**09.05.2012 Patentblatt 2012/19**

(73) Patentinhaber: **Bam Deutschland AG**
**70191 Stuttgart (DE)**

(72) Erfinder: **HOLGER, Simon**
**72813 St. Johann (DE)**

(74) Vertreter: **DREISS Patentanwälte PartG mbB**
**Friedrichstrasse 6**
**70174 Stuttgart (DE)**

(56) Entgegenhaltungen:
**EP-A1- 2 146 309**
**WO-A1-00/39506**
**DE-A1- 19 600 694**
**FR-A1- 2 248 476**
**GB-A- 1 571 967**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Temperierung eines Gebäudes mit wenigstens einem in eine Geschossdecke des Gebäudes integrierten und von einer Flüssigkeit durchströmten Kühl/Heizsystem, bei dem ein Sollwert für eine Vorlauftemperatur der Flüssigkeit in Abhängigkeit von einer Umgebungslufttemperatur (Ta) des Gebäudes gebildet wird. Die Erfindung betrifft darüber hinaus eine Vorrichtung nach dem Oberbegriff des unabhängigen Vorrichtungsanspruchs. Ein solches Verfahren und eine solche Vorrichtung ist jeweils aus der FR 2 248 476 bekannt.

Eine solche Vorrichtung ist auch aus der GB 1 571 967 bekannt.

Eine Geschossdecke mit einem solchen integrierten Kühl/Heizsystem wird im Folgenden auch als Thermoaktive Decke oder TAD bezeichnet. TAD werden schon seit etlichen Jahren eingesetzt, um den Energieverbrauch zu reduzieren und die Behaglichkeit zu erhöhen.

Dabei ergeben sich jedoch Probleme durch die große thermische Trägheit der TAD, die durch die große Masse der Geschossdecke in Verbindung mit ihrer spezifischen Wärmekapazität bedingt ist. Die große thermische Trägheit verlangsamt eine Leistungsanpassung an äußere und innere Wärmequellen und Wärmesenken des Gebäudes. Es hat sich zum Beispiel bei Versuchen gezeigt, dass sich eine sprungartige Veränderung der Raumlufttemperatur erst nach mehreren Stunden in einer merklichen Veränderung einer innerhalb der Thermoaktiven Decke erfassten Temperatur abbildet. Umgekehrt dauert es mehrere Stunden, bis sich eine Änderung der Vorlauftemperatur, also eine Änderung der Temperatur des flüssigen Kühl/Heizmediums vor dessen Eintritt in die TAD, in einer Änderung der Raumtemperatur abbildet.

Um vergleichsweise schnelle Temperaturregeleingriffe zu ermöglichen, werden bei per se bekannten Gebäuden, die mit TAD ausgerüstet sind, zur Abhilfe zusätzliche Heizkörper und/oder Umluftkühler eingesetzt.

Es kann dann passieren, dass die TAD und die zusätzlichen Heizkörper und/oder Umluftkühler die Raumtemperatur in entgegengesetzte Richtungen beeinflussen. Dieses Gegenheizen oder Gegenkühlen ist mit einem hohen Energieverbrauch verbunden. Um das Problem des Gegenheizens und Gegenkühlens auf ein Minimum zu reduzieren, wird die TAD bei bekannten Gebäuden bei Umgebungslufttemperaturen von 0°C bis +18°C nicht aktiv betrieben. Sie wird also abgeschaltet. Die theoretischen Vorteile der TAD hinsichtlich des Energieverbrauchs bleiben daher bei Temperaturen in diesem Temperaturbereich, die in manchen Gegenden Mitteleuropas und vergleichbaren Gebieten während etwa 75% eines Jahres herrschen, ungenutzt.

Vor diesem Hintergrund besteht die Aufgabe der Erfindung in der Angabe eines Verfahrens und einer Vorrichtung der jeweils eingangs genannten Art, mit denen sich eine TAD während eines größeren Anteils eines Jahres zur Heizung und/oder Kühlung des Gebäudes ohne Gegenheizung oder Gegenkühlung nutzen lässt, so dass sich ein ökonomischerer Betrieb der Gebäudeheizung und/oder -Kühlung ergibt. Im Idealfall soll auf zusätzliche Heizkörper und/oder Umluftkühler verzichtet werden können.

Diese Aufgabe wird jeweils mit den Merkmalen der unabhängigen Ansprüche gelöst. Hinsichtlich ihrer Verfahrensaspekte zeichnet sich die vorliegende Erfindung dadurch aus, dass für die Bildung des Sollwerts der Vorlauftemperatur eine für einen künftigen Zeitpunkt prognostizierte fiktive Umgebungslufttemperatur verwendet wird, wobei ein Basiswert der prognostizierten Umgebungslufttemperatur als Funktionswert einer Funktion bestimmt wird, die innerhalb eines Tages liegende Zeitpunkte auf vorbestimmte Temperaturwerte abbildet, eine Strahlungstemperatur des Himmels über dem Gebäude gemessen wird und ein Bewölkungsgrad in Abhängigkeit von der gemessenen Strahlungstemperatur ermittelt wird, ein Korrekturwert in Abhängigkeit von dem ermittelten Bewölkungsgrad gebildet wird, der Basiswert mit dem Korrekturwert verknüpft wird und die für den künftigen Zeitpunkt prognostizierte fiktive Umgebungslufttemperatur als Funktion der Verknüpfung gebildet wird.

Die zu einem bestimmten zukünftigen Zeitpunkt herrschende Umgebungslufttemperatur beeinflusst maßgeblich die zu diesem Zeitpunkt erforderliche Heizleistung und/oder Kühlleistung einer TAD. In Kenntnis der in der Zukunft liegenden Umgebungslufttemperatur lässt sich die Vorlauftemperatur der TAD rechtzeitig so steuern, dass die von der TAD bereitgestellte Heizleistung oder Kühlheizung unter Berücksichtigung ihrer thermischen Trägheit besser als bisher mit dem tatsächlichen Leistungsbedarf zu dem zukünftigen Zeitpunkt übereinstimmt.

Dadurch, dass als Basiswert ein Funktionswert einer Funktion bestimmt wird, die innerhalb eines Tages liegende Zeitpunkte auf vorbestimmte Temperaturwerte abbildet, kann die übliche, von der Tageszeit abhängige Entwicklung und Schwankung der Tagestemperatur berücksichtigt werden.

Die Amplitude dieser Schwankung hängt vom Wärmeaustausch des Gebäudes mit seiner Umgebung und damit vom Wärmetransport durch die Atmosphäre ab, der selbst stark von der Bewölkung abhängig ist. Die bei klarem Himmel vergleichsweise große Amplitude nimmt mit zunehmender Bewölkung ab. Dadurch, dass erfindungsgemäß ein Bewölkungsgrad ermittelt wird, ein Korrekturwert in Abhängigkeit von dem ermittelten Bewölkungsgrad gebildet wird, der Basiswert mit dem Korrekturwert verknüpft wird und der für den künftigen Zeitpunkt prognostizierte erste Wert einer Temperatur als Funktion der Verknüpfung des Basiswerts mit dem Korrekturwert gebildet wird, erlaubt die Erfindung eine Berücksichtigung des Einflusses des Wärmetransports durch die Atmosphäre auf die sich zu dem zukünftigen Zeitpunkt einstellende Umgebungslufttemperatur. Es hat sich ferner gezeigt, dass sich der Bewölkungsgrad gut als Funktion einer gemessenen Strahlungstemperatur des Himmels angeben lässt.

Die Erfindung erlaubt insgesamt eine Vergrößerung des Teilperioden eines Jahres, in denen ausschließlich mit der TAD geheizt und gekühlt. wird. Im Idealfall kann auf zusätzliche Heizflächen verzichtet werden.

Weitere Vorteile der Erfindung liegen darin, dass die Vorlauftemperatur verringert werden kann, wobei eine obere Grenztemperatur von max. 30°C angestrebt wird. Die Erfindung eignet sich daher für Heizsysteme mit niederer Heizwassertemperatur, wie sie von Wärmepumpen und Solarkollektoren bei hohen Nutzungsgraden zur Verfügung gestellt werden kann.

Dies gilt analog für die Kühlung, die mit höheren Vorlauftemperaturen erfolgen kann. Eine Kühlung mit einer unteren Grenze der Vorlauftemperatur von ca. 16°C eignet sich besonders für die natürliche Kühlung mit adiabatischen Rückkühlwerken und/oder Erdkollektoren und/oder Energiepfählen oder Grundwasser. Somit erlaubt die Erfindung eine Heizung und/oder Kühlung eines Gebäudes unter Einhaltung der in der DIN EN 15251 formulierten Behaglichkeitskriterien, die ausschließlich über eine TAD erfolgt.

Vorteilhaft ist auch, dass als Folge der sehr geringen Temperaturdifferenzen zwischen Vorlauftemperatur und Decken-Hauttemperatur Wärme durch die TAD und die Kühl/Heizflüssigkeit von wärmeren Räumen in kühlere Räume verschoben wird. Dies führt zu einer deutlichen Reduzierung der Heiz- und Kühllast, was, je nach Ausrichtung des Gebäudes in Bezug auf die Himmelsrichtung, zu einer Energieeinsparung von 20% bis 30% führen kann. Dieser Effekt, der sich durch eine Verschränkung der Rückläufe (bei eindeutig nach Himmelsrichtung ausgerichteten Gebäuden) noch verstärken lässt, wurde durch Messungen und Berechnung mittels Simulationen verifiziert.

Bevorzugt ist auch, dass die Funktion eine jeweils vorbestimmte Lage eines Temperaturminimums und eines Temperaturmaximums innerhalb eines Tages sowie einen vorbestimmten Wert einer Temperaturschwankung innerhalb des Tages abbildet.

Diese Ausgestaltung erlaubt eine Berücksichtigung des üblichen Verlaufs der Tagestemperatur, die am frühen Morgen einen Minimalwert durchläuft und am späten Nachmittag einen Maximalwert erreicht. Diese Schwankung lässt sich zum Beispiel mit einer Sinusfunktion oder einer Summe von Sinusfunktionen annähern, wobei die Periodendauer 24 Stunden beträgt.

Eine weitere bevorzugte Ausgestaltung zeichnet sich dadurch aus, dass die Verknüpfung des Korrekturwerts mit dem Basiswert multiplikativ erfolgt.

Während die Zeitpunkte des Temperatur-Minimums und des Temperaturmaximums nicht oder nur wenig von der Bewölkung abhängig sind, beeinflusst die Bewölkung stark die Werte des Minimums und des Maximums der Temperatur und damit auch die Amplitude der Temperaturschwankung. Darüber hinaus wird die Amplitude auch von der gemittelten Tagestemperatur beeinflusst. Bei kleinen Mittelwerten ist die Amplitude kleiner als bei großen Mittelwerten.

Mit zunehmender Bewölkung nimmt die Amplitude ab, während sie mit abnehmender Bewölkung zunimmt. Die multiplikative Verknüpfung dehnt oder staucht den modellierten Temperaturunterschied in einer Weise, die dem tatsächlichen Einfluss der Bewölkung gut angepasst ist.

Dies gilt insbesondere für eine Ausgestaltung, bei der der Bewölkungsgrad so ermittelt wird, dass er Werte zwischen dem Wert Null und einem Maximalwert annehmen kann, wobei der Wert Null einen klaren Himmel und der maximale Wert (1,0) einen maximal bewölkten Himmel charakterisiert.

Bevorzugt ist auch, dass ein erster Wert der Strahlungstemperatur des Himmels gemessen wird, ein zweiter Wert der Strahlungstemperatur des Himmels für einen klaren Himmel berechnet wird, eine Umgebungslufttemperatur des Gebäudes gemessen wird, und der Bewölkungsgrad in Abhängigkeit von dem ersten Wert der Strahlungstemperatur, dem zweiten Wert der Strahlungstemperatur und der gemessenen Umgebungslufttemperatur ermittelt wird. Eine weitere Ausgestaltung sieht eine Ermittlung des zweiten Werts der Strahlungstemperatur in Abhängigkeit von einer errechneten Taupunkttemperatur vor.

Es hat sich gezeigt, dass die Ermittlung des Bewölkungsgrades in Abhängigkeit von diesen Größen eine passende Abbildung des Einflusses der Bewölkung auf die zu prognostizierende Umgebungslufttemperatur erlaubt.

Eine weitere bevorzugte Ausgestaltung zeichnet sich dadurch aus, dass der Bewölkungsgrad als Quotient von Temperaturdifferenzen ermittelt wird, wobei eine Differenz aus dem ersten Wert der Strahlungstemperatur und dem zweiten Wert der Strahlungstemperatur auf eine Differenz der Umgebungslufttemperatur und der zweiten Strahlungstemperatur normiert wird.

Diese Art der Berechnung liefert das gewünschte Verhalten des modellierten Bewölkungsgrades als zwischen Null und einem Maximalwert variierender Zahlenwert. In diesem Zusammenhang wird darauf hingewiesen, dass der Begriff des Bewölkungsgrades, wie er in dieser Anmeldung verstanden wird, den Wärmetransport durch die Atmosphäre charakterisiert und nicht mit dem meteorologischen Begriff des Bewölkungsgrades übereinstimmen muss.

Bevorzugt ist auch, dass ein aktueller Wert der Umgebungsluftfeuchtigkeit gemessen wird und der für den klaren Himmel berechnete zweite Werte der Strahlungstemperatur in Abhängigkeit von der aktuellen Umgebungslufttemperatur und dem aktuellen Wert der Umgebungsluftfeuchtigkeit berechnet wird.

Diese Ausgestaltung erlaubt eine Berücksichtigung des Einflusses der Luftfeuchtigkeit in der Umgebung des Gebäudes auf den Wärmetransport durch die Atmosphäre.

Ferner ist bevorzugt, dass ein erster Wert des Bewölkungsgrades zum aktuellen Zeitpunkt ermittelt und gespeichert wird, ein zu einem dem aktuellen Zeitpunkt entsprechenden Zeitpunkt des Vortages ermittelter und gespeicherter zweiter Wert des Bewölkungsgrades ermittelt wird, eine Differenz von erstem Wert des Bewölkungsgrades und zweitem Wert des Bewölkungsgrades gebildet wird, und der Korrekturwert in Abhängigkeit von der Differenz gebildet wird, wobei er insbesondere als proportional zu der Differenz oder als mit der Differenz identischer Wert gebildet wird.

Durch diese Ausgestaltung ändert sich der Korrekturwert nur dann, wenn sich die Bewölkung ändert. In Verbindung mit der Ausgestaltung, nach der der Bewölkungsgrad zwischen dem Wert Null bei klarem Himmel und einem maximalen Wert bei vollständig bedecktem Himmel variiert, ergibt sich der Effekt, dass die Differenz und damit der Korrekturwert bei abnehmender Bewölkung positiv und bei zunehmender Bewölkung negativ ist. Dadurch wird die Amplitude bei abnehmender Bewölkung gedehnt und bei zunehmender Bewölkung gestaucht.

Bevorzugt ist auch, dass das Ergebnis der Verknüpfung des Basiswerts der Umgebungslufttemperatur für den zukünftigen Zeitpunkt und des in Abhängigkeit von dem ermittelten Bewölkungsgrad gebildeten Korrekturwerts zusätzlich durch den Temperaturverlauf des vorhergehenden Tages geführt wird.

Dadurch wird der prognostizierte Wert gewissermaßen als Änderung des Vortageswertes ermittelt, was für einen Abgleich zwischen der Prognose und der Realität sorgt.

Dabei ist besonders bevorzugt, dass, für die Führung durch den Temperaturverlauf des Vortages, die Temperatur zu einem Zeitpunkt des Vortages, der dem zukünftigen Zeitpunkt des aktuellen Tages entspricht, ermittelt und zu dem Ergebnis der Verknüpfung addiert wird.

Das Ergebnis der Verknüpfung stellt insofern die prognostizierte Änderung gegenüber dem Vortag dar, so dass der prognostizierte Wert als Summe eines in der Vergangenheit gemessenen und damit genau bekannten Werts und einer prognostizierten Änderung ermittelt wird. Unsicherheiten der Prognose wirken sich daher nur auf den Wert der Änderung aus, so dass sich insgesamt eine gute Genauigkeit des prognostizierten Summenwertes ergibt.

Ferner ist bevorzugt, dass ein erster Wert der Temperatur zum aktuellen Zeitpunkt gemessen wird, ein zweiter Wert der Temperatur zu einem dem aktuellen Zeitpunkt entsprechenden Zeitpunkt des Vortages ermittelt wird, eine Differenz aus dem ersten Wert und dem zweiten Wert ermittelt wird und die Differenz zu dem Ergebnis der Verknüpfung addiert wird.

Die Differenz entspricht dem gemessenen Temperaturunterschied zwischen den beiden Tagen. Man kann erwarten, dass der für den aktuellen Zeitpunkt aus gemessenen Temperaturwerten ermittelte Temperaturunterschied eine gute Näherung für einen Unterschiedswert ist, der für alle Zeitpunkte des Tages anwendbar ist.

Diese Ausgestaltung sorgt dafür, dass der Trend einer Temperaturänderung ermittelt und bei der Prognose berücksichtigt wird. Dadurch, dass die Differenz aus zu gleichen Tageszeitpunkten ermittelten Werten gebildet wird, ist der so ermittelte Trend nicht durch mit einer Periodendauer von 24 Stunden periodischen Schwankungen der Umgebungslufttemperatur beeinträchtigt.

Die gleichen Vorteile ergeben sich jeweils in Verbindung mit den Vorrichtungsaspekten der Erfindung.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

## Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1 das technische Umfeld der Erfindung; und

Fig. 2 eine TAD zusammen mit einer Vorrichtung zur Steuerung der TAD-Vorlauftemperatur.

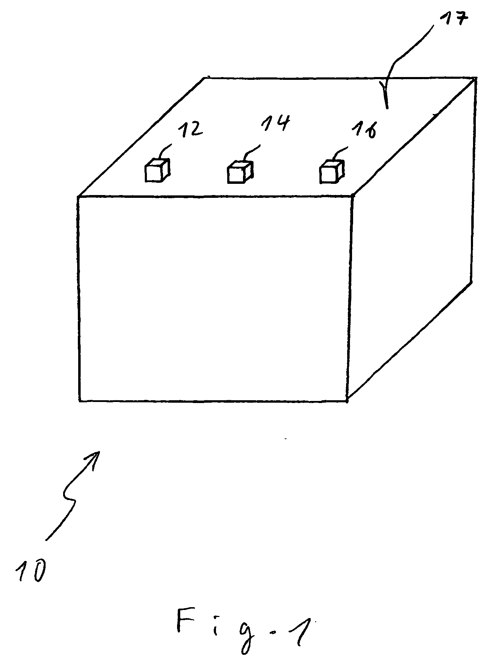

Im Einzelnen zeigt die Fig. 1 ein Gebäude 10, das mit wenigstens einer TAD ausgerüstet ist. Dem Gebäude 10 ist insbesondere ein Sensor 12 zur Erfassung der Wärmeeinstrahlung aus dem Himmel zugeordnet. Der Sensor 12 ist bevorzugt ein Infrarotsensor, dessen Signal ein Maß für die Temperatur der Atmosphäre ist. Ein Maß für diese Temperatur wird im Folgenden auch als Strahlungstemperatur des Himmels oder auch als Skytemperatur bezeichnet. Solche Infrarotsensoren sind per se bekannt, zum Beispiel in Form von Infrarotpyrometern. Für die Messung wird bevorzugt ein Infrarotpyrometer mit einem Messbereich von -50 °C bis +200 °C verwendet, das mit einem Neigungswinkel von ca. 45 ° zur Horizontalen und nach Westen ausgerichtet ist. Bevorzugte Ausgestaltungen der Erfindung verwenden zusätzlich zu dem Infrarotsensor 12 einen Umgebungslufttemperatursensor 14 und/oder einen Feuchtigkeitssensor 16. Die Sensoren 12, 14, 16 sind in der Ausgestaltung, die in der Fig. 1 dargestellt ist, auf dem Dach des Gebäudes 10 angeordnet. Durch im Detail nicht dargestellte Schutzvorrichtungen werden sie vor einer direkten Sonneneinstrahlung geschützt. Die Sensoren 12, 14, 16 können auch räumlich getrennt von dem Gebäude 10 angeordnet sein. Wesentlich ist lediglich, dass sie die lokal für das Gebäude 10 gültigen Werte der Strahlungstemperatur, der Umgebungslufttemperatur und der Luftfeuchtigkeit in ihren Signalen abbilden.

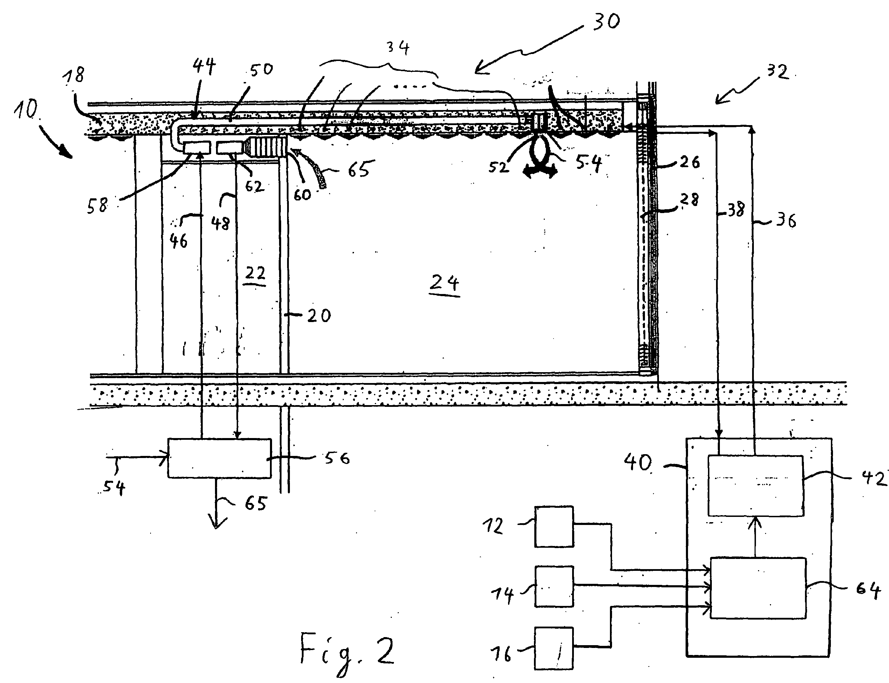

Fig. 2 zeigt weitere Details des technischen Umfeldes der Erfindung in der Form einer schematischen Schnittansicht eines teilweise dargestellten Geschosses eines an sich beliebigen Gebäudes mit einer bevorzugten TAD.

Im Einzelnen zeigt die Fig. 2 eine Schnittansicht eines teilweise dargestellten Geschosses des Gebäudes 10 mit Betondecken 18. Es ist eine Wand 20 angedeutet zwischen einem Flur oder einer an sich beliebigen Mittelzone 22 und einem zu temperierenden Innenraum 24 des Gebäudes. Ferner ist eine Fensterfront 26 mit einer schematisch angedeuteten Abschattungseinrichtung 28 dargestellt.

Zur Temperierung des Gebäudes 10, d.h. zur Beheizung und zur Kühlung des Gebäudes ist ein in die Betondecken 18 integriertes wasserbasiertes Kühl-/Heizsystem 30 vorgesehen. Das wasserbasierte Kühl-/Heizsystem 30 umfasst eine wasserführende Verrohrung 32 mit in die jeweilige Betondecke 18 integrierten, d. h. einbetonierten Kühl-/Heizrohren 34. Die wasserführende Verrohrung 32 umfasst einen Vorlauf 36 und einen Rücklauf 38. Die Kühl-/Heizrohre 34 sind im beispielhaft dargestellten Fall mit einem Abstand von ca. 60 bis 80 mm zu der dem jeweiligen Innenraum 24 zugewandten Oberfläche der Betondecke 18 vorgesehen. Sie haben einen beispielhaften Abstand von 20 bis 30 cm voneinander. Das wasserbasierte Kühl-/Heizsystem 30 wird vorzugsweise durchgehend auch bei Nacht betrieben. Es wird mit entsprechend temperiertem Wasser mit verhältnismäßig geringer Strömungsgeschwindigkeit von vorzugsweise 0,1 bis 0,7 m/s im Bereich der einbetonierten Kühl-/Heizrohre 34 durchströmt. Auf diese Weise kann die Temperierung des Gebäudes 2 vorzugsweise ausschließlich durch das wasserbasierte Kühl-/Heizsystem bei allen Jahreszeiten realisiert werden.

An vorzugsweise zentraler Stelle des Gebäudes 2 ist eine mit dem Bezugszeichen 40 schematisch angedeutete Kühl-/Heizzentrale vorgesehen. Dort wird das im Rücklauf 38 der wasserführenden Verrohrung 32 zurückgeführte Wasser wieder auf die von den Umgebungsbedingungen, insbesondere der Außentemperatur oder auch von weiteren Parametern abhängige Vorlauftemperatur gebracht, um wieder in den Vorlauf 36 des Kreislaufsystems gefördert zu werden.

Das wasserbasierte Kühl-/Heizsystem 30 wird durchweg als Niedrigtemperatursystem betrieben, d.h. es wird bei allen typischerweise auftretenden Außentemperaturen von beispielsweise -30°C bis +35°C mit einer Vorlauftemperatur des Wassers zwischen vorzugsweise 15°C und 40°C, insbesondere zwischen 17°C und 33°C gefahren. Da bei einer bevorzugten Verfahrensführung die Rücklauftemperatur des Wassers bei Austritt aus den Betondecken und Rückführung zu der Kühl-/Heizzentrale 40 vorzugsweise um höchstens 5°C von der wiedereinzustellenden Vorlauftemperatur abweicht, muss auf keine konventionellen Heizaggregate oder Kühlaggregate für die Temperierung des Wassers des wasserbasierten Kühl-/Heizsystems 30 zurückgegriffen werden.

Es erweist sich vielmehr als vorteilhaft, dass hierfür Wärmetauschereinrichtungen 42 verwendet werden können, die als Wärmetauschermedium auf sogenannte natürliche Energien zurückgreifen. Beispielsweise kann hierfür im Untergrund ein Erdkollektor mit einer sehr großen Leitungslänge unterhalb des Gebäudes verlegt sein, mittels dessen im Kühlbetrieb des Gebäudes Wärme aus dem im Rücklauf 38 zurückgeführten Wasser entnommen oder im Heizbetrieb Wärme an das im Rücklauf 38 zurückgeführte Wasser abgegeben werden kann.

Es können auch sogenannte Energiepfähle eingesetzt werden, bei denen im Gegensatz zu typischen Erdkollektoren die Medienführung in vertikalen in Betonstützpfeiler eingegossenen Rohren erfolgt. Für den Kühlbetrieb erweist es sich als besonders vorteilhaft, wenn ein adiabatisches Rückkühlwerk eingesetzt wird, welches vorzugsweise mit aus der Umgebung des Gebäudes entnommener Außenluft arbeitet, die in einer Zerstäubungseinrichtung mit einem Wassersprühnebel beaufschlagt wird, so dass sie infolge der Verdampfung des Wassersprühnebels gekühlt wird und dann zum Wärmetausch mit dem zurückgeführten Wasser genutzt werden kann. Sollte dies nicht hinreichend sein, so kann zusätzlich oder stattdessen auf den erwähnten Erdkollektor oder Energiepfahl umgestellt werden. Dessen ungeachtet können an sich bekannte Wärmepumpen oder natürlich auch konventionelle Kühl-/Heizaggregate verwendet werden. Im Heizbetrieb kann selbstverständlich auch Fernwärme in der Wärmetauschereinrichtung 42 zum Einsatz gelangen.

Zur Belüftung, d. h. zur Frischluftzufuhr in das Gebäude 10, ist in einer bevorzugten Ausgestaltung ein von dem wasserbasierten Kühl-/Heizsystem 30 entkoppeltes und separates luftführendes Rohrsystem 44 mit einem Zuluft führenden Teil 46 und einem Abluft führenden Teil 48 vorgesehen. Das Luft führende Rohrsystem 44 umfasst eine Vielzahl von einem jeweiligen Innenraum 24 zugeordneten und wenigstens 4 m langen Abschnitten 50 des Zuluft führenden Teils 46 des Rohrsystems 44, die in die Betondecke 18 des jeweiligen Innenraums 24 einbetoniert sind und über eine jeweilige Einströmöffnung 52 in den betreffenden Innenraum 24 münden.

Bei der dem Gebäude 10 und dessen Innenräumen 24 zuzuführenden Frischluft handelt es sich bevorzugt um 100% frische Außenluft, also nicht um Mischluft. Diese zuzuführende Frischluft wird aus der Umgebung des Gebäudes 10 angesaugt (Bezugszeichen 54) und einer wiederum beispielhaft an zentraler Stelle des Gebäudes 10 vorgesehenen Wärmetauschereinrichtung 56 zugeführt, wo eine thermische Kopplung mit der im Abluft führenden Teil 48 des luftführenden Rohrsystems 44 strömenden Abluft ausgeführt und damit eine Vortemperierung der den Innenräumen 24 zuzuführenden Frischluft durchgeführt wird. Bei der Wärmetauschereinrichtung 56 kann es sich beispielsweise um einen Plattenwärmetauscher handeln.

Die von außen zugeführte und in der Wärmetauschereinrichtung 56 vortemperierte Frischluft wird über den Zuluft führenden Teil 46 des luftführenden Rohrsystems 44 in typischerweise vertikalen Steigsträngen den einzelnen Geschossen zugeführt, wo insbesondere ein horizontaler in einem abgehängten Deckenbereich vorgesehener Zuluftkanal 58 geschossweise vorgesehen sein kann. Von diesem horizontalen Zuluftkanal 58 ausgehend führen die schon erwähnten Abschnitte 50 weg, die in die Betondecke 18 einbetoniert sind und über eine jeweilige Einströmöffnung 52 in den betreffenden Innenraum 24 münden. Ferner ist ersichtlich, dass in dem jeweiligen Innenraum 24 eine Ausströmöffnung 60 für die Abluft vorgesehen ist, die über einen verhältnismäßig kurzen Abschnitt in einen im beispielhaften Fall parallel zu dem horizontalen Zuluftkanal verlaufenden horizontalen Abluftkanal 62 führt.

Es hat sich gezeigt, dass auch bei Verwendung einfachster glatter handelsüblicher Kunststoffrohre zur Ausbildung der einbetonierten Abschnitte 50 bei einer Abschnittslänge von nur wenigstens 4 m eine Temperierung der den Innenräumen 24 zuzuführenden Frischluft auf im Wesentlichen die Temperatur der wassergekühlten bzw. wassererwärmten Betondecke 18 realisierbar ist, so dass die in die Innenräume 24 einströmende Frischluft nicht als unangenehm kalt oder warm empfunden wird.

Die durch die einbetonierten Abschnitte 50 geführte und in den jeweiligen Innenraum eingeleitete Frischluft wird dabei auf die Temperatur der wassertemperierten Betondecke 18 erwärmt oder gekühlt; ihre Temperatur liegt dann typischerweise zwischen der Temperatur des in der Decke geführten Wassers und der Deckenabstrahlungstemperatur, je nachdem wo und wie die luftführenden Abschnitte 50 des Zuluft führenden Teils 46 des Rohrsystems 44 in Bezug auf die wasserführenden Kühl-/Heizrohre 34 des wasserbasierten Kühl-/Heizsystems 30 innerhalb der Betondecke 18 geführt sind. Die aus den Innenräumen 24 abgeführte Abluft wird mit der typischen Raumtemperatur der Innenräume 24 entnommen und über den Abluft führenden Teil 48 zu der Wärmetauschereinrichtung 56 geführt und danach an die Umgebung des Gebäudes ausgeblasen (Bezugszeichen 65).

Fig. 2 zeigt damit insbesondere ein in eine Geschossdecke 18 des Gebäudes 10 integriertes Kühl/Heizsystem 30. Die Geschossdecke 18 stellt eine Ausgestaltung einer TAD dar und wird im Folgenden auch als TAD 18 bezeichnet. In der dargestellten Ausgestaltung wird das integrierte Kühl/Heizsystem 30 insbesondere durch die in das Material der Geschossdecke 18 und damit thermisch mit der Geschossdecke 18 gekoppelten Kühl-Heizrohre 34 realisiert. Die Kühl-Heizrohre 34 sind über den Vorlauf 36 und den Rücklauf 38 mit einem Kühl-/Heizstellglied 42 verbunden. Bei dem Kühl-/Heizstellglied 42 handelt es sich bevorzugt um eine Anordnung wenigstens einer steuerbaren Wärmequelle und/oder Wärmesenke, zum Beispiel um die bereits genannten Wärmetauscher 42 in Verbindung mit steuerbaren Ventilen und/oder Pumpen sowie Wärmereservoirs verschiedener Temperaturen.

Der Einfluss des Kühl-/Heizstellgliedes 42 auf die Vorlauftemperatur wird durch ein Steuergerät 64 gesteuert. Die in diesem hydraulischen Kreislauf zirkulierende Kühl/Heizflüssigkeit führt der TAD 18 entweder Wärme zu oder nimmt aus der TAD Wärme auf. Die Richtung des Wärmetransports und die Menge der transportierten Wärme wird wesentlich durch die Vorlauftemperatur Tv bestimmt, mit der die Kühl/Heizflüssigkeit in die Kühl-/Heizrohre 34 der TAD 18 eintritt.

Zur Einstellung der Vorlauftemperatur Tv bildet das Steuergerät 64 zunächst einen Sollwert Tv_soll der Vorlauftemperatur Tv aus verschiedenen Eingangsgrößen. In der dargestellten Ausgestaltung sind diese Eingangsgrößen die Signale der bereits erwähnten Sensoren 12, 14 und 16, also eine Strahlungstemperatur des Himmels über dem Gebäude 10, eine Umgebungslufttemperatur und eine Umgebungsluftfeuchtigkeit. Zur Einstellung der Vorlauftemperatur Tv auf den Sollwert Tv_soll bildet das Steuergerät 64 Stellgrößen SG_42 zur Ansteuerung des Kühl-/Heizstellgliedes 42. Dabei können auch Signale weiterer Sensoren verwertet werden, die in der Fig. 2 nicht explizit dargestellt sind. Beispiele solcher Sensoren sind Innenraumtemperatursensoren des Gebäudes 10 und/oder ein Vorlauftemperatursensor, mit dessen Signal ein Regelkreis zur Einstellung der Vorlauftemperatur geschlossen werden kann.

Das Steuergerät 64 ist dazu eingerichtet, insbesondere dazu programmiert, ein Verfahren mit den Merkmalen des Anspruchs 1 und/oder mit den Merkmalen der untergeordneten Verfahrensansprüche auszuführen, wobei der Bewölkungsgrad in Abhängigkeit von dem Signal des Strahlungssensors 12, gegebenenfalls ergänzt durch das Signal des Umgebungslufttemperatursensors 14, gebildet wird. Das Steuergerät 64 bildet daher zusammen mit dem Sensor 12, gegebenenfalls ergänzt durch den Sensor 14, ein Ausführungsbeispiel einer erfindungsgemäßen Vorrichtung. In einer bevorzugten Ausgestaltung ist das Steuergerät 64 ferner dazu programmiert, Parameter der verwendeten Gleichungen durch ein Lernprogramm an die tatsächlichen Verhältnisse anzupassen.

In einer bevorzugten Ausgestaltung erfolgt die Prognose einer Umgebungslufttemperatur Tfa(x) für einen um x Stunden in der Zukunft liegenden Zeitpunkt nach der folgenden Vorschrift:

$$Tfa(x) = Ta(-24+x) + Ta(0) - Ta(-24) + \sin[(b + Tagesstunde) \cdot C1] \cdot (C(-24) - C(0)) \cdot a$$

Der Faktor C1 bildet die 24 Stunden eines Tages auf eine Periode der Sinusfunktion ab, also auf das Intervall von 0 bis 2 $\pi$ oder von 0 bis 360°. Für die Verwendung des als Bogenmaß ausgedrückten Winkelintervalls von 0 bis 2 $\pi$ ist C1 =

$\pi/12$: für die Verwendung des in Grad ausgedrückten Winkelintervalls von 0 bis 360° ist der Faktor C1 = 15.

Dabei bildet der Funktionswert der Sinusfunktion einen Basiswert für die zu prognostizierende Umgebungslufttemperatur Tfa(x). Die Sinusfunktion bildet innerhalb eines Tages liegende Zeitpunkte, die im Argument der Sinusfunktion als Tagesstunde bezeichnet werden, auf vorbestimmte Temperaturwerte ab. Die Werte liegen zunächst im Intervall von -1 bis 1 und werden durch den Verstärkungsfaktor a ggf. auf ein Temperaturintervall mit anderen Grenzen abgebildet. Die Periodendauer beträgt 24 Stunden. Der Parameter b verschiebt die Sinuskurve relativ zur Tageszeit so, dass das Minimum der Sinuskurve bei der minimalen Temperatur in den frühen Morgenstunden und das Maximum der Temperatur in den späten Nachmittagsstunden liegt.

Dieser durch die Sinusfunktion gebildete Basiswert wird mit einem Korrekturwert C(-24) - C(0) verknüpft, der in Abhängigkeit von einem ermittelten Bewölkungsgrad C gebildet wird.

Darüber hinaus wird das Ergebnis der Verknüpfung des zusätzlich durch den Temperaturverlauf des vorhergehenden Tages geführt. Die Führung erfolgt dadurch, dass die Temperatur Ta(-24+x) zu einem Zeitpunkt des Vortages, der dem zukünftigen Zeitpunkt des aktuellen Tages entspricht, ermittelt und zu dem Ergebnis der Verknüpfung addiert wird, und ferner dadurch, dass ein erster Wert Ta(0) der Temperatur zum aktuellen Zeitpunkt gemessen wird, ein zweiter Wert T(-24) der Temperatur zu einem dem aktuellen Zeitpunkt entsprechenden Zeitpunkt des Vortages ermittelt wird, eine Differenz aus dem ersten Wert Ta(0) und dem zweiten Wert Ta(-24) ermittelt wird und die Differenz zu dem Ergebnis der Verknüpfung addiert wird.

In einer Ausgestaltung wird der Bewölkungsgrad C wie folgt ermittelt: Es wird ein erster Wert T_Sky(tat) der Skytemperatur, also der Strahlungstemperatur des Himmels gemessen, bzw. aus Signalen des Strahlungssensors 12 ermittelt. Darüber hinaus wird ein zweiter Wert T_Sky(min) der Strahlungstemperatur des Himmels für einen klaren Himmel berechnet.

Die Berechnung der Sky-Temperatur Tsky_min für eine klaren Himmel erfolgt in einer Ausgestaltung über eine empirische Gleichung, z.B. über die Gleichung

$$Tsky_\min = \left(0{,}736 + 0{,}00571 Tdp + 0{,}000003318 (Tdp)^2\right)^{0{,}25} (Tdp + 273{,}15) - 273{,}15$$

wobei Tdp die Taupunkttemperatur ist. Diese errechnet sich aus der Lufttemperatur und der relativen Luftfeuchte. Beide Werte werden gemessen.

Als Alternativen sind auch empirische Formeln bekannt, die zusätzlich Einflüsse der Umgebungsluftfeuchtigkeit berücksichtigen. Nur als Beispiel wird diesem Zusammenhang auf die Veröffentlichung "Measurement of night sky emissivity in determining radiant cooling from cool roofs and roof ponds" der University of Nebraska hingewiesen. Nach dieser Veröffentlichung wird die Sky-Temperatur für den klaren Himmel aus der Außentemperatur, also der hier mit dem Sensor 14 erfassten Umgebungslufttemperatur, und der Außenluftfeuchte berechnet, die hier gegebenenfalls mit dem Feuchtigkeitssensor 16 erfasst wird. Bei dieser Ausgestaltung wird ein aktueller Wert der Umgebungsluftfeuchtigkeit gemessen und der für den klaren Himmel berechnete zweite Werte der Strahlungstemperatur in Abhängigkeit von der aktuellen Umgebungslufttemperatur und dem aktuellen Wert der Umgebungsluftfeuchtigkeit berechnet.

Ferner wird die gemessene Umgebungslufttemperatur eigenständig zur Bildung des Bewölkungsgrades herangezogen, so dass der Bewölkungsgrad insgesamt in Abhängigkeit von dem ersten Wert der Strahlungstemperatur, dem zweiten Wert der Strahlungstemperatur und der gemessenen Umgebungslufttemperatur ermittelt wird.

Dabei wird der Bewölkungsgrad bevorzugt als Quotient von Temperaturdifferenzen ermittelt, wobei eine Differenz aus dem ersten Wert der Strahlungstemperatur und dem zweiten Wert der Strahlungstemperatur auf eine Differenz der Umgebungslufttemperatur und der zweiten Strahlungstemperatur normiert wird:

$$C = \frac{T_sky(tat) - T_sky(\min)}{Ta(0) - T_sky(\min)} .$$

Damit ist C = 0, wenn der Zähler gleich Null ist, was bei klarem Himmel der Fall ist. Bei vollständig bedecktem Himmel ist der Zähler dagegen von Null verschieden und die gemessene Skytemperatur Tsky wird etwa gleich der gemessenen Umgebungslufttemperatur sein. Dann ist der Quotient gleich 1.

Ein erster Wert C(0) des Bewölkungsgrades C wird zum aktuellen Zeitpunkt ermittelt und gespeichert. Ferner wird ein zu einem dem aktuellen Zeitpunkt entsprechenden Zeitpunkt des Vortages und gespeicherter zweiter Wert C(-24) des Bewölkungsgrades C ermittelt, also ausgelesen. Aus dem ersten Wert C(0) des Bewölkungsgrades und dem zweitem Wert C(-24) wird die Differenz C(0) - C(-24) gebildet. Anschließend wird diese Differenz noch mit einem vorbestimmbaren Verstärkungsfaktor a multipliziert. Das erhaltene Produkt stellt den in Abhängigkeit von der Differenz der genannten Bewölkungsgrade gebildeten Korrekturwert dar.

Im Ergebnis wirkt sich die Korrektur durch die Differenz C(0)-C(-24) wie folgt aus: Ändert sich die Bewölkung gegenüber dem Vortag nicht, ist der Korrekturwert gleich Null und das Produkt aus dem Korrekturwert und dem Basiswert ist ebenfalls gleich Null. Die oben genannte Vorschrift zur Berechnung der künftigen Umgebungslufttemperatur reduziert sich dann auf:

$$Tfa(x) = Ta(-24 + x) + Ta(0) - Ta(-24)$$

In dieser Gleichung sind nur noch Messwerte für die Umgebungslufttemperatur enthalten, die bereits erfasst und gespeichert worden sind und die der Führung des Ergebnisses der Verknüpfung des Basiswerts der Umgebungslufttemperatur für den zukünftigen Zeitpunkt und des in Abhängigkeit von dem ermittelten Bewölkungsgrad gebildeten Korrekturwerts durch den Temperaturverlauf des vorhergehenden Tages dienen. Die Temperatur T(-24+x) gibt die Vortagestemperatur als Näherungswert für die zu prognostizierende Temperatur zum künftigen Zeitpunkt x des aktuellen Tages an und die Differenz T(0) - T(-24) gibt den Trend der Temperaturänderung vom Vortag zum aktuellen Tag an. Betrachtet man Werte dieser Summe über einen ganzen Tag, so wird der Verlauf dieser Werte ein Minimum für aktuelle Zeitpunkte besitzen, die in den frühen Morgenstunden liegen, und ein Maximum für aktuelle Zeitpunkte besitzen, die in den späten Nachmittagsstunden liegen.

Nimmt die Bewölkung dagegen zu, wird C(0) größer als C(-24) und die Differenz C(-24) -C(0) wird einen von Null verschiedenen, negativen Wert annehmen. Das Produkt aus der Sinusfunktion und der Differenz ist dann ebenfalls ungleich Null und negativ. Das bedeutet, dass der auf den Messwerten Ta(-24), Ta(0) und Ta(-24) basierende Näherungswert durch die Sinusfunktion moduliert wird. Weil der Wert der Verknüpfung negativ ist, ändert sich jedoch das Vorzeichen der Sinusfunktion, was einer Phasenverschiebung um 180° gegenüber dem Schwankungsverlauf der Summe der ersten drei Temperaturen Ta(-24+x), Ta(0) und Ta(-24) entspricht. Der Einfluss der Sinusfunktion wirkt sich dann so aus, dass, dass die prognostizierte fiktive Umgebungslufttemperatur gegenüber der Summe der ersten drei Temperaturen für Nachtzeitpunkte höher und für Tageszeitpunkte niedriger ausfallen wird.

Eine abnehmende Bewölkung wirkt sich umgekehrt so aus, so dass die Berechnungsvorschrift den tatsächlichen Einfluss der Bewölkung auf die sich später einstellende Umgebungslufttemperatur gut abbildet.

Der Sollwert Tv_soll der Vorlauftemperatur Tv wird in einer Ausgestaltung in folgender Abhängigkeit von der als Funktion des Bewölkungsgrades prognostizierten Umgebungslufttemperatur Tfa(x) bestimmt:

$$Tv_soll = \max(18; d - e \cdot Tfa(x))$$

Mit anderen Worten: Tv_soll wird durch eine Maximalwertauswahl auf einen unteren Wert, hier 18 °C, als Mindestvorlauftemperatur begrenzt. Dadurch wird eine unerwünschte Kondensation von Feuchtigkeit verhindert. d und e sind vorbestimmbare, an das Gebäude anzupassende Parameter, zum Beispiel die Werte d = 24, 25 °C und e = 0,25 besitzen können. Bei einer prognostizierten Umgebungslufttemperatur von 5°C ergibt sich somit ein Sollwert Tv_soll zu (max(18; 24,25 - 0,25 * 5) = 23 °C.

Mit anderen Worten lässt sich die in der Formel

$$Tfa(x) = Ta(-24 + x) + Ta(0) - Ta(-24) + \sin[(b + Tagesstunde) \cdot C1] \cdot (C(-24) - C(0)) \cdot a$$

verwirklichte Ausgestaltung der Erfindung auch wie folgt beschreiben: Die vom Vortag bekannte Temperatur Ta(-24+x) stellt eine erste Näherung für die im Laufe des aktuellen Tages zu einem späteren Zeitpunkt x zu erwartende Umgebungslufttemperatur dar. Ta(0) ist die aktuell gemessene Temperatur, und die Temperatur Ta(-24) ist die vor 24 Stunden gemessene Temperatur. Die Differenz Ta(0)-Ta(-24) liefert also einen Wert für die von gestern auf heute eingetretene Temperaturänderung. Diese wird als Näherungswert für die entsprechende Temperaturdifferenz zwischen dem künftigen Zeitpunkt x und der 24 Stunden vor dem Zeitpunkt x herrschenden Umgebungslufttemperatur verwendet und zu der Temperatur T(-24+x) addiert.

Die Sinusfunktion liefert einen Basiswert einer von der Tagesstunde (Tageszeit) abhängigen Temperaturschwankung. Dieser Wert liegt zwischen -1 und +1. Er wird mit einer Korrekturfunktion (C (-24)-C (0)) multipliziert, der die Änderung des Bewölkungsgrades über dem Gebäude abbildet. Der Faktor a ist ein Verstärkungsfaktor, der als Einstellparameter zum Anpassen der Steuerung an die bei einem realen Gebäude herrschenden Verhältnisse dient. Während die Zeitpunkte des Temperatur-Minimums und des Temperaturmaximums nicht oder nur wenig von der Bewölkung abhängig sind, beeinflusst die Bewölkung stark die Werte des Minimums und des Maximums der Temperatur und damit auch die Amplitude der Temperaturschwankung. Darüber hinaus wird die Amplitude auch von der gemittelten Tagestemperatur beeinflusst. Bei kleinen Mittelwerten ist die Amplitude kleiner als bei großen Mittelwerten. Auch diese Einflüsse werden in einer Ausgestaltung in den Faktor c abgebildet und auf diese Weise berücksichtigt.

In diesem Sinne lässt sich die Erfindung auch wie folgt definieren: Die Erfindung betrifft ein Verfahren zur Temperierung eines Gebäudes 10 mit wenigstens einem in eine Geschossdecke 18 des Gebäudes 10 integrierten und von einer Flüssigkeit durchströmten Kühl-Heizsystem 30, bei dem eine Umgebungslufttemperatur des Gebäudes 10 gemessen wird und bei dem ein Sollwert für eine Vorlauftemperatur der Flüssigkeit in Abhängigkeit von der gemessenen Umgebungslufttemperatur und einem Wert für einen Bewölkungsgrad des Himmels über dem Gebäude gebildet wird, wobei für die Bildung des Sollwerts der Vorlauftemperatur eine für einen künftigen Zeitpunkt prognostizierte fiktive Umgebungslufttemperatur verwendet wird.

Das Verfahren zeichnet sich dadurch aus, dass eine am Vortag zu einem Zeitpunkt, der durch seine Uhrzeit dem künftigen Zeitpunkt entspricht, für den die Temperatur der Umgebungsluft prognostiziert werden soll, gemessene Umgebungslufttemperatur zu einer Differenz aus einer zum aktuellen Zeitpunkt gemessenen Umgebungslufttemperatur und einer vor 24 Stunden gemessenen Umgebungslufttemperatur addiert wird und dass zu der so gebildeten Summe ein Produkt aus einer Sinusfunktion und einer von der Änderung des Bewölkungsgrades über dem Gebäude abhängigen Korrekturfunktion addiert wird, wobei die Sinusfunktion einen Basiswert einer von der Tageszeit abhängigen Temperaturschwankung liefert und wobei die Korrekturfunktion eine Änderung des Bewölkungsgrades in den letzten 24 Stunden über dem Gebäude abbildet.

Der Bewölkungsgrad wird dabei bevorzugt so ermittelt, wie es weiter oben unter Bezug auf die Gleichung erläutert worden ist. Die Vorrichtungsaspekte der Erfindung können analog dazu so definiert werden, dass die Vorrichtung 12, 64 dazu eingerichtet ist, ein solches Verfahren auszuführen.

## Patentansprüche

1. Verfahren zur Temperierung eines Gebäudes (10) mit wenigstens einem in eine Geschossdecke (18) des Gebäudes (10) integrierten und von einer Flüssigkeit durchströmten Kühl/Heizsystem (30), bei dem eine Umgebungslufttemperatur des Gebäudes (10) gemessen wird und bei dem ein Sollwert für eine Vorlauftemperatur der Flüssigkeit in Abhängigkeit von der gemessenen Umgebungslufttemperatur gebildet wird, **dadurch gekennzeichnet, dass** für die Bildung des Sollwerts der Vorlauftemperatur eine für einen künftigen Zeitpunkt prognostizierte fiktive Umgebungslufttemperatur verwendet wird, wobei ein Basiswert der prognostizierten Umgebungslufttemperatur als Funktionswert einer Funktion bestimmt wird, die innerhalb eines Tages liegende Zeitpunkte auf vorbestimmte Temperaturwerte abbildet, eine Strahlungstemperatur des Himmels über dem Gebäude gemessen wird und ein Bewölkungsgrad in Abhängigkeit von der gemessenen Strahlungstemperatur ermittelt wird, ein Korrekturwert in Abhängigkeit von dem ermittelten Bewölkungsgrad gebildet wird, der Basiswert mit dem Korrekturwert verknüpft wird und die für den künftigen Zeitpunkt prognostizierte fiktive Umgebungslufttemperatur als Funktion der Verknüpfung gebildet wird.

2. Verfahren nach Anspruch 1, **dadurch gekennzeichnet, dass** die Funktion eine jeweils vorbestimmte Lage eines Temperaturminimums und eines Temperaturmaximums innerhalb eines Tages sowie einen vorbestimmten Wert einer Temperaturschwankung innerhalb des Tages abbildet.

3. Verfahren nach Anspruch 2, **dadurch gekennzeichnet, dass** die Verknüpfung des Korrekturwerts mit dem Basiswert multiplikativ erfolgt.

4. Verfahren nach einem der vorhergehenden Ansprüche, **dadurch gekennzeichnet, dass** der Bewölkungsgrad so ermittelt wird, dass er Werte zwischen dem Wert Null und einem Maximalwert annehmen kann, wobei der Wert Null einen klaren Himmel und der maximale Wert einen maximal bewölkten Himmel charakterisiert.

5. Verfahren nach Anspruch 4, **dadurch gekennzeichnet, dass** ein erster Wert der Strahlungstemperatur des Himmels gemessen wird, ein zweiter Wert der Strahlungstemperatur des Himmels für einen klaren Himmel berechnet wird, eine Umgebungslufttemperatur des Gebäudes gemessen wird, und der Bewölkungsgrad in Abhängigkeit von dem ersten Wert der Strahlungstemperatur, dem zweiten Wert der Strahlungstemperatur und der gemessenen Umgebungslufttemperatur ermittelt wird.

6. Verfahren nach Anspruch 5, **dadurch gekennzeichnet, dass** der Bewölkungsgrad als Quotient von Temperaturdifferenzen ermittelt wird, wobei eine Differenz aus dem ersten Wert der Strahlungstemperatur und dem zweiten Wert der Strahlungstemperatur auf eine Differenz der Umgebungslufttemperatur und der zweiten Strahlungstemperatur normiert wird.

7. Verfahren nach Anspruch 5 oder 6, **dadurch gekennzeichnet, dass** ein aktueller Wert der Umgebungsluftfeuchtigkeit gemessen wird und der für den klaren Himmel berechnete zweite Werte der Strahlungstemperatur in Abhängigkeit von der aktuellen Umgebungslufttemperatur und dem aktuellen Wert der Umgebungsluftfeuchtigkeit berechnet wird.

8. Verfahren nach einem der vorhergehenden Ansprüche, **dadurch gekennzeichnet dass** ein erster Wert des Bewölkungsgrades zum aktuellen Zeitpunkt ermittelt und gespeichert wird, ein zu einem dem aktuellen Zeitpunkt entsprechenden Zeitpunkt des Vortages und gespeicherter zweiter Wert des Bewölkungsgrades ermittelt wird, eine Differenz von erstem Wert des Bewölkungsgrades und zweitem Wert des Bewölkungsgrades gebildet wird und der Korrekturwert in Abhängigkeit von der Differenz gebildet wird.

9. Verfahren nach einem der vorhergehenden Ansprüche, **dadurch gekennzeichnet, dass** das Ergebnis der Verknüpfung des Basiswerts der Umgebungslufttemperatur für den zukünftigen Zeitpunkt und des in Abhängigkeit von dem ermittelten Bewölkungsgrad gebildeten Korrekturwerts zusätzlich durch den Temperaturverlauf des vorhergehenden Tages geführt wird.

10. Verfahren nach Anspruch 9, **dadurch gekennzeichnet, dass** für die Führung durch den Temperaturverlauf des Vortages die Temperatur zu einem Zeitpunkt des Vortages, der dem zukünftigen Zeitpunkt des aktuellen Tages entspricht, ermittelt und zu dem Ergebnis der Verknüpfung addiert wird.

11. Verfahren nach Anspruch 9 oder 10, **dadurch gekennzeichnet, dass** ein erster Wert der Temperatur zum aktuellen Zeitpunkt gemessen wird, ein zweiter Wert der Temperatur zu einem dem aktuellen Zeitpunkt entsprechenden Zeitpunkt des Vortages ermittelt wird, eine Differenz aus dem ersten Wert und dem zweiten Wert ermittelt wird und die Differenz zu dem Ergebnis der Verknüpfung addiert wird.

12. Vorrichtung (64, 12) zur Bildung eines Sollwerts einer Vorlauftemperatur für ein in eine Geschossdecke (18) integriertes und von einer Flüssigkeit durchströmtes Kühl/Heizsystem, wobei die Vorrichtung einen Umgebungslufttemperatursensor (14) aufweist und dazu eingerichtet ist, den Sollwert in Abhängigkeit von der mit dem Umgebungslufttemperatursensor gemessenen Umgebungslufttemperatur zu bilden, und wobei die Vorrichtung (64, 12) ein Steuergerät (64) und einen Sensor (12) zur Erfassung der Strahlungstemperatur des Himmels aufweist, **dadurch gekennzeichnet, dass** das Steuergerät dazu eingerichtet, insbesondere dazu programmiert ist, ein Verfahren mit den Merkmalen des Anspruchs 1 durchzuführen.

13. Vorrichtung (64, 12) nach Anspruch 12, **dadurch gekennzeichnet, dass** die Vorrichtung (64, 12) dazu eingerichtet, insbesondere dazu programmiert ist, ein Verfahren nach einem der Ansprüche 2 bis 12 durchzuführen.

## Claims

1. A method for controlling the temperature of a building (10), equipped with at least one cooling/heating system (30) with a liquid flowing through it, which system is integrated into a ceiling (18) of a building (10) floor, said method comprising measuring the ambient air temperature of the building (10) and forming a desired value for a feedline flow temperature of the liquid in dependence on the measured ambient air temperatue, **characterized in that** in order to form the desired value for the feedline flow temperature, a fictional ambient air temperature is used that is predicted for a future point in time, a basic value for the predicted ambient air temperature is determined as function value of a function which maps points in time located within a single day to predetermined temperature values, and a radiation temperature of the sky above the building is measured and a degree of clouding is determined in dependence on the measured radiation temperature, and a correction value is formed in dependence on the determined degree of clouding, and the base value is linked to the correction value and the fictional ambient air temperature predicted for the future point in time, is formed as a function of the linking.

2. The method according to claim 1, **characterized in that** the function maps a respectively predetermined position for a temperature minimum and a temperature maximum in a single day, as well as a predetermined value for a temperature fluctuation within one day.

3. The method according to claim 2, **characterized in that** the correction value is linked multiplicative with the basic value.

4. The method according to one of the preceding claims, **characterized in that** the degree of clouding is determined such that it can assume values between the value zero and a maximum value, wherein the value zero characterizes a clear sky and the maximum value characterizes a maximum cloud cover for the sky.

5. The method according to claim 4, **characterized in that** a first value for the radiation temperature of the sky is measured, that a second value for the radiation temperature of the sky is computed for a clear sky, that an ambient air temperature of the building is measured and that the degree of clouding is determined in dependence on the first value of the radiation temperature, the second value for the radiation temperature and the measured ambient air temperature.

6. The method according to claim 5, **characterized in that** the degree of clouding is determined as a quotient of temperature differences, wherein a difference between the first value for the radiation temperature and the second value for the radiation temperature is scaled to a difference between the ambient air temperature and the second radiation temperature.

7. The method according to claim 5 or 6, **characterized in that** an actual value is measured for the humidity in the ambient air and that the value computed for the second radiation temperature value for the clear sky is computed in dependence on the actual ambient air temperature and the actual value for the humidity of the ambient air.

8. The method according to one of the preceding claims, **characterized in that** a first value for the degree of clouding is determined and stored for the actual point in time, that a second value for the degree of clouding that was stored for a point in time on the previous day that corresponds to the actual point in time, that a difference between the first value for the degree of clouding and the second value for the degree of clouding is then formed and that the correction value is subsequently formed in dependence on this difference.

9. The method according to one of the preceding claims, **characterized in that** the result obtained by linking the basic value for the ambient air temperature for the future point in time and the correction value, formed in dependence on the determined degree of clouding, is additionally guided by the temperature course of the preceding day.

10. The method according to claim 9, **characterized in that** for the guidance based on the temperature course of the previous day, the temperature is determined at a point in time of the previous day which corresponds to the future point in time in the current day and that the result is added to the result obtained by the linking.

11. The method according to claim 9 or 10, **characterized in that** a first temperature value is measured for the current point in time, that a second temperature value is measured for a point in time on the previous day which corresponds to the current point in time, that a difference is determined between the first value and the second value, and that this difference is added to the result of the linking.

12. Apparatus (64, 12) for forming a desired value for the feedline flow temperature for a cooling/heating system through which a liquid flows and which is integrated into the ceiling (18) of a building (10) floor, said device comprising a sensor for measuring an ambient air temperature of the building (10), said device being adapted to form said desired value in dependence on the ambient air temperature measured with said sensor, and wherein said apparatus comprises a control unit (64) and a sensor (12) for measuring the radiation tempereture of the sky, **characterized in that** the control unit is adapted, in particular programmed to execute a method comprising the features of claim 1.

13. The device (64, 12) according to claim 12, **characterized in that** the device (64, 12) is configured and in particular programmed so as to execute a method as defined in the claims 2 to 12.

## Revendications

1. Procédé de thermorégulation d'un bâtiment (10) comprenant au moins un système de refroidissement / chauffage (30) intégré dans un plafond (18) du bâtiment (10) et parcouru par un liquide, selon lequel la température de l'air ambiant dans le bâtiment (10) est mesurée et une valeur de consigne de la température d'entrée du fluide est formée en fonction de la température de l'air ambiant mesurée,
**caractérisé en ce que**

pour la formation de la valeur de consigne de la température d'entrée on utilise une température de l'air ambiant fictive prévue pour un instant futur, une valeur de base de la température de l'air ambiant prévue étant déterminée en tant que valeur fonctionnelle d'une fonction qui représente dans une journée des instants ayant des valeurs de température prédéfinies, une température de rayonnement du ciel sur le bâtiment, étant mesurée un taux d'ennuagement étant déterminé en fonction de la température de rayonnement mesurée, une valeur de correction étant formée en fonction du taux d'ennuagement déterminé, la valeur de base étant combinée avec la valeur de correction et la température de l'air ambiant fictive prévue pour l'instant futur étant formée en tant que fonction de cette combinaison.

**2.** Procédé conforme à la revendication 1,
**caractérisé en ce que**
la fonction représente une position prédéfinie respective d'un minimum de température et d'un maximum de température pendant une journée ainsi qu'une valeur prédéfinie d'une variation de température pendant la journée.

**3.** Procédé conforme à la revendication 2,
**caractérisé en ce que**
la combinaison de la valeur de correction avec la valeur de base est effectuée de façon multiplicative.

**4.** Procédé conforme à l'une des revendications précédentes,
**caractérisé en ce que**
le taux d'ennuagement est déterminé de façon à pouvoir prendre une valeur comprise entre la valeur zéro et une valeur maximum, la valeur zéro caractérisant un ciel clair et la valeur maximum caractérisant un ciel ennuagé au maximum.

**5.** Procédé conforme à la revendication 4,
**caractérisé en ce qu'**
une première valeur de la température de rayonnement du ciel est mesurée, une seconde valeur de la température de rayonnement du ciel est calculée pour un ciel clair, la température de l'air ambiant du bâtiment est mesurée, et le taux d'ennuagement est déterminé en fonction de la première valeur de la température de rayonnement, de la seconde valeur de la température de rayonnement et de la température de l'air ambiant mesurée.

**6.** Procédé conforme à la revendication 5,
**caractérisé en ce que**
le taux d'ennuagement est déterminé en tant que quotient de différences de température, la différence entre la première valeur de la température de rayonnement et la seconde valeur de la température de rayonnement est normalisée en fonction de la différence entre la température de l'air ambiant et la seconde température de rayonnement.

**7.** Procédé conforme à la revendication 5 ou 6,
**caractérisé en ce que**
la valeur actuelle de l'humidité de l'air ambiant est mesurée, et la seconde valeur de la température de rayonnement calculée pour un ciel clair est calculée en fonction de la température de l'air ambiant actuelle et de la valeur actuelle de l'humidité de l'air ambiant.

**8.** Procédé conforme à l'une des revendications précédentes,
**caractérisé en ce qu'**
une première valeur du taux d'ennuagement à l'instant actuel est déterminée et mise en mémoire, une seconde valeur du taux d'ennuagement à un instant du jour précédent correspondant à l'instant actuel et mis en mémoire est déterminée, la différence entre la première valeur du taux d'ennuagement et la seconde valeur du taux d'ennuagement est formée et la valeur de correction est formée en fonction de la différence.

**9.** Procédé conforme à l'une des revendications précédentes,
**caractérisé en ce que**
le résultat de la combinaison de la valeur de base de la température de l'air ambiant pour l'instant futur et de la valeur de correction formée en fonction du taux d'ennuagement déterminé est en outre obtenu en tenant compte des variations de température du jour précédent.

**10.** Procédé conforme à la revendication 9,

**caractérisé en ce que**
pour tenir compte des variations de température du jour précédent, la température à un instant du jour précédent qui correspond à l'instant futur du jour actuel est déterminée et est ajoutée au résultat de la combinaison.

**11.** Procédé conforme à la revendication 9 ou 10,
**caractérisé en ce qu'**
une première valeur de la température à l'instant actuel est mesurée, une seconde valeur de la température à un instant du jour précédent correspondant à l'instant actuel est déterminée, la différence entre la première valeur et la seconde valeur est déterminée et la différence est ajoutée au résultat de la combinaison.

**12.** Dispositif (64, 12) permettant de former une valeur de consigne d'une température d'entrée d'un système de refroidissement / chauffage intégré dans un plafond (18) et parcouru par un liquide, ce dispositif comprenant un détecteur (14) de la température de l'air ambiant et étant réalisé pour former la valeur de consigne en fonction de la température de l'air ambiant mesurée avec le détecteur de la température de l'air ambiant et le dispositif (64, 12) comportant un appareil de commande (64) et un détecteur (12) permettant de déterminer la température de rayonnement du ciel,
**caractérisé en ce que**
l'appareil de commande est réalisé et en particulier programmé pour permettre la mise en oeuvre du procédé conforme à la revendication 1.

**13.** Dispositif (64, 12) conforme à la revendication 12,
**caractérisé en ce que**
le dispositif (64, 12) est réalisé et en particulier programmé pour permettre la mise en oeuvre du procédé conforme à l'une des revendications 2 à 12.

17
12
14
16
10

Fig. 1

10
18
20
22
24
26
28
30
32
34
36
38
40
42
44
46
48
50
52
54
56
58
60
62
64
65
12
14
16

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- FR 2248476
- GB 1571967 A